# EUROPEAN PATENT SPECIFICATION

(11) **EP 2 364 541 B1**
(45) Date of publication and mention of the grant of the patent: **28.06.2017**
(21) Application number: 09756796.0
(22) Date of filing: 10.11.2009
(51) Int. Cl.: H04L 29/06, H04L 12/801, H04L 12/811, H04L 12/841, H04L 12/853, H04L 12/825

(54) **STEPWISE PROBING FOR ADAPTIVE STREAMING IN A PACKET COMMUNICATION NETWORK**
SCHRITTWEISE SONDIERUNG FÜR ADAPTIVES STREAMING IN EINEM PAKETKOMMUNIKATIONSNETZ
SONDAGE SÉQUENTIEL POUR DIFFUSION EN FLUX ADAPTATIVE DANS UN RÉSEAU DE COMMUNICATION PAR PAQUETS

(30) Priority: 11.11.2008 US 113350 P; 12.11.2008 US 113664 P; 09.11.2009 US 614500
(43) Date of publication of application: 14.09.2011
(73) Proprietor: Telefonaktiebolaget LM Ericsson (publ), 164 83 Stockholm (SE)
(72) Inventor: EINARSSON, Tobjörn, SE-11240 Stockholm (SE); DOVSTAM, Kristofer, SE-168 60 Bromma (SE); EKLÖF, William, SE-584 32 Linköping (SE)
(74) Representative: Ericsson
(86) International application number: PCT/IB2009/007406
(87) International publication number: WO 2010/055389

(56) References cited:
- US-A1- 2006 026 294
- SHENG-SHUEN WANG ET AL: "TCP-friendly congestion control for layered video streaming using end-to-end bandwidth inference" MULTIMEDIA SIGNAL PROCESSING, 2008 IEEE 10TH WORKSHOP ON, IEEE, PISCATAWAY, NJ, USA, 8 October 2008 (2008-10-08), pages 462-467, XP031356675 ISBN: 978-1-4244-2294-4
- KASHIBUCHI K ET AL: "A new smooth handoff scheme for mobile multimedia streaming using RTP dummy packets and RTCP explicit handoff notification" 3 April 2006 (2006-04-03), WIRELESS COMMUNICATIONS AND NETWORKING CONFERENCE, 2006. WCNC 2006. IE EE LAS VEGAS, NV, USA 3-6 APRIL 2006, PISCATAWAY, NJ, USA,IEEE, PISCATAWAY, NJ, USA, PAGE(S) 2162 - 2167 , XP031331437 ISBN: 9781424402694 , pages 2162-2167 page 2162 - page 2164
- TUNALI T ET AL: "Adaptive available bandwidth estimation for internet video streaming" SIGNAL PROCESSING. IMAGE COMMUNICATION, ELSEVIER SCIENCE PUBLISHERS, AMSTERDAM, NL, vol. 21, no. 3, 1 March 2006 (2006-03-01), pages 217-234, XP025080470 ISSN: 0923-5965 [retrieved on 2006-03-01]
- JAIN M ET AL: "END-TO-END AVAILABLE BANDWIDTH: MEASUREMENT METHODOLOGY, DYNAMICS, AND RELATION WITH TCP THROUGHPUT" COMPUTER COMMUNICATION REVIEW, ACM, NEW YORK, NY, US, vol. 32, no. 4, 1 October 2002 (2002-10-01), pages 295-308, XP001162293 ISSN: 0146-4833

## Description

### CROSS-REFERENCE TO RELATED APPLICATIONS

This application claims the benefit of U.S. Provisional Application No. 61/113,350, filed on November 11, 2008, and of U.S. Provisional Application No. 61/113,664, filed on November 12, 2008.

### TECHNICAL FIELD

The present invention relates to transmitting data packets within a communication network. More particularly, and not by way of limitation, the present invention is directed to a system and method for improving adaptive streaming within a packet communication network.

### BACKGROUND

With an increased bandwidth in communication networks, users and applications are no longer limited to receiving non-real time text messages, emails, or files over a communication network. Instead, more and more applications and services are being rendered where real-time video transmissions are being offered not only to fixed/wire line subscribers but also to remote/wireless subscribers. Examples of such services include Mobile TV or Video on Demand (VoD) allowing mobile subscribers to view TV channels or movies on one's cell phone equipment. Mobile streaming services, such as Mobile TV and VoD require a certain amount of bandwidth to be able to deliver the expected quality of experience to the user. In that regard, the amount of bandwidth that can be used by the service is highly dependent on the Radio Access Network (RAN) technology used for communicating wirelessly with the mobile equipment. More specifically, RAN technologies available today can be divided into different categories including 2G technologies such as GSM/GPRS/EDGE, 3G/3.5G technologies such as WCDMA and HSPA, and 4G technologies such as Long-Term Evaluation (LTE). The amount of bandwidth provided by these different RAN types differs from 44 kbps (GPRS) to over 10 Mbps (LTE). It is, however, not only the maximum amount of bandwidth that differentiates the RAN types. Different RAN types use different data delivery techniques, different types of radio links, different methods of buffering, etc, which affect the timing of the delivered data in numerous ways. Also, providing a steady data transmission pace to a wireless terminal is more difficult than to a fixed line terminal since wireless links have a higher bit error rate and the throughput may vary depending on parameters such as distance to the base station and the number of active users in a given radio cell.

Additionally, in typical mobile streaming scenarios, the underlying RAN technology being used by a mobile subscriber may not be known to an application service provider providing such Mobile TV or VoD services. This implies that the client on the terminal side as well as the server in the network may not be aware of the type of RAN technology that is being used for transmitting streaming data wirelessly from the server to the terminal. Due to this, as well as highly varying bandwidth availabilities for different RAN types, it is not desirable for a mobile terminal to be fixed with a particular bitrate for transmitting streaming data. Therefore it is important that an appropriate bitrate compatible with the available bandwidth is selected for providing a particular streaming service and that the streaming system has the ability to adapt the media bitrate during the session.

Accordingly, a concept of adaptive streaming has been introduced by the industry in order to improve the bandwidth utilization and to dynamically adjust the encoded bit rate of a media stream data depending on specific network conditions. To achieve this, the streaming server must continuously estimate the current state of the network and adjust the sent bit rate upward or downward depending on the available bandwidth associated with that particular streaming data link. The typical mechanism used for this is RTCP Receiver Reports which report the arrival of packets on the client side as well as the time the receiver report was sent with respect to the reception time of the latest received RTCP Sender Report at the server. There may also be additional reports like the special RTCP NADU packets, defined in 3GPP TS 26.234, which provide client buffer feedback to the server. From these reports, the server can estimate the increased round-trip time or the decreased client buffer levels indicating that the data is arriving at a slower pace than sent and that the available bandwidth is not sufficient. Therefore, a server may often react and decrease the sent bitrate before major packet-losses occur in the network due to network buffer overflow or the user experiences rebuffering in the client due to buffer underflow. However, it is not clear from these reports the amount of additional bandwidth that is available in the network. With respect to estimating the appropriate bandwidth availability, it is therefore generally more challenging to discover when more bandwidth is available than when less bandwidth is available.

A paper presented at the IEEE 10th workshop in New Jersey in October, 2008, entitled "TCP-friendly congestion control for layered video streaming using end-to-end bandwidth inference", SHENG-SHUEN WANG ET AL; discloses the use of new, non-standardized types of RTP/RTCP packets and a "communication network" supporting these non-standardized packets.

Also, a paper presented at the WIRELESS COMMUNICATIONS AND NETWORKING CONFERENCE, 2006. WCNC 2006, IEEE LAS VEGAS, NV, USA: "A new smooth handoff scheme for mobile multimedia streaming using RTP dummy packets and RTCP explicit handoff notification" KASHIBUCHI K ET AL, discloses a system where a communication network does not need to support non-standardized packets; the client operates together with the server in a non-standardized way. Kashibuchi does not work for a network that requires sustained probing in order to actively increase available bandwidth. Tje patent publication US 2006/0026294 A1 discloses increasing the rate of content streaming by padding with dummy packets. Since there is no clear indication as to how much increase in the bitrate can be tolerated by the available channel bandwidth, the most common approach is to more or less periodically perform an up-switch to a higher content rate and monitor receiver reports to see if the bitrate can be sustained. Because there is typically a rather limited number of encoding bitrates for the content, the probing step may be too high for the RAN technology which may result in network buffer overflows, loss of data, or possibly rebuffering resulting in bad media quality and undesirable user experience. For stored content this may be remedied by sending the content faster than real-time to fill, but that is not possible for live content, where the content bitstream is produced as it is sent. Furthermore, since the reaction time of the server depends on the reporting frequency from the client as well as the round-trip time in the system, theoretically, the probing bitrates should be possible to be tuned. However, even if the adaptive streaming algorithm may be responsive enough to realize that the increased bitrate is too high and accordingly decreases the bitrate before too much data loss in the network, such switching between a higher quality bit-stream and then falling back to a lower bitrate will still cause a short period of higher-quality video and then back to the lower quality video. This provides varying viewing quality and annoying experience to the user. Accordingly, especially for live streaming data, there is a need for an improved and innovative method and system for providing adaptive streaming within a packet based communication network that can both provide tunable probing bitrates while avoiding visible or audible fluctuations in the media quality.

### SUMMARY

It would be advantageous to have a system and method for providing stepwise probing for increasing bitrates in an adaptive streaming communication network that overcomes the disadvantages of the prior art. The present invention provides such a method according to claim 1. The present application provides a method and apparatus for providing adaptive streaming within a packet communication network wherein probing of the network bandwidth can be performed at arbitrary bitrates, and where the data is sent in the ordinary packet flows in order to determine whether the bandwidth availability associated with the network can handle a higher bitrate than the currently used bitrate. The probing is conducted by modifying the media streams in such a way that padding data or other dummy data is inserted in such media streams. As a further embodiment of the present invention, including such padded or dummy data in the media stream utilizes the standard reporting mechanism, such as the RTCP Receiver Reports, for determining the transport network's capability. In response to a determination that the network bandwidth is stable enough to accommodate the higher bitrate, the streaming server thereinafter stops sending dummy data and instead starts sending actual content with higher encoding rate and quality to the client terminal. Otherwise, the streaming server halts the probing attempt and reverts back to streaming data at the previous lower bitrate.

In another aspect, the present application is directed to sequentially increasing the bitrates associated with transmitting such in-stream dummy data until a determination is made that the maximum bitrate has been achieved. In yet another aspect of the present application wherein the streaming server receives a number of receiver reports from the client terminal and wherein the size of the incremental increase in the bitrate of the sequential probing is dependent on the receiving frequency of said receiver reports. In yet another aspect of the present application the probing is done by sending extra packets in the video packet stream in terms of additional empty P-frames, padded with specific bit patterns to reach the desired transport bit rate.

In yet another aspect, the present application is directed to a method for providing adaptive streaming of multimedia data from a streaming server to a client terminal over a packet communication link where streaming data are transmitted from a server to a client using a first bitrate. The server thereinafter probes the network by transmitting enlarged packets resulting in a higher bitrates where the packets are stuffed with dummy data either on the RTP level or in the video or audio bit stream level. On the RTP level, the packets can be padded and the padding counter set appropriately while in the media level, there are either specific padding code words (e.g. H.263 and MPEG-4 MCBPC) or special unit types (e.g. NAL types for H.264) that can be used. The server then receives indication over the network as to the delivery performance of the packet stream with higher bitrate from the standard reporting mechanisms. In response to a determination that the packet stream with a higher bitrate is compatible with the network bandwidth availability, the server thereinafter transmits packets carrying actual streaming data encoded at the higher bitrate and without the padded dummy data.

Yet, in another aspect of the present application the probing steps are performed on a sequential manner by probing the network with a first higher bitrate. In response to a determination that the probing with higher bitrate can be handled by the packet communication link, probing the network by transmitting a packet with an even higher bitrate wherein such step of sequentially increasing the bitrate is performed until the maximum bitrate associated with the network has been reached or the desired next encoding bitrate.

Yet, in another aspect of the present application, in response to a determination that the network cannot handle a higher bitrate, not performing the next probing until a particular or randomly chosen time period has elapsed.

Yet, in another aspect of the present application, after each failed probing attempt, increasing the time period to avoid a ping-ponging behavior.

### BRIEF DESCRIPTION OF THE DRAWINGS

In the following section, the invention will be described with reference to exemplary embodiments illustrated in the figures, in which:
FIG. 1 is a block diagram of a packed based communication network transmitting streaming data from a server to a mobile equipment;
FIG. 2 is a block diagram of a data packet stuffed with dummy data in accordance with the teachings of the present invention;
FIG. 3 is a block diagram of a packed based communication network transmitting a data packet with a higher bit rate stuffed with dummy data in accordance with the teachings of the present invention;
FIG. 4 is a diagram illustrating the step of sequentially increasing the bit rates in accordance with the teachings of the present invention;
FIG. 5 is a state diagram illustrating the steps performed for sequentially probing and increasing the bit rates in accordance with the teachings of the present invention;
FIG. 6 is a RTP packet structure;
FIG. 7 is a RTCP packet structure for reporting delivery performance;
FIGs. 8 and 9 are block diagrams illustrating a streaming server including a bandwidth adaptor for evaluating and deciding on the appropriate bitrates for streaming data;

### DETAILED DESCRIPTION

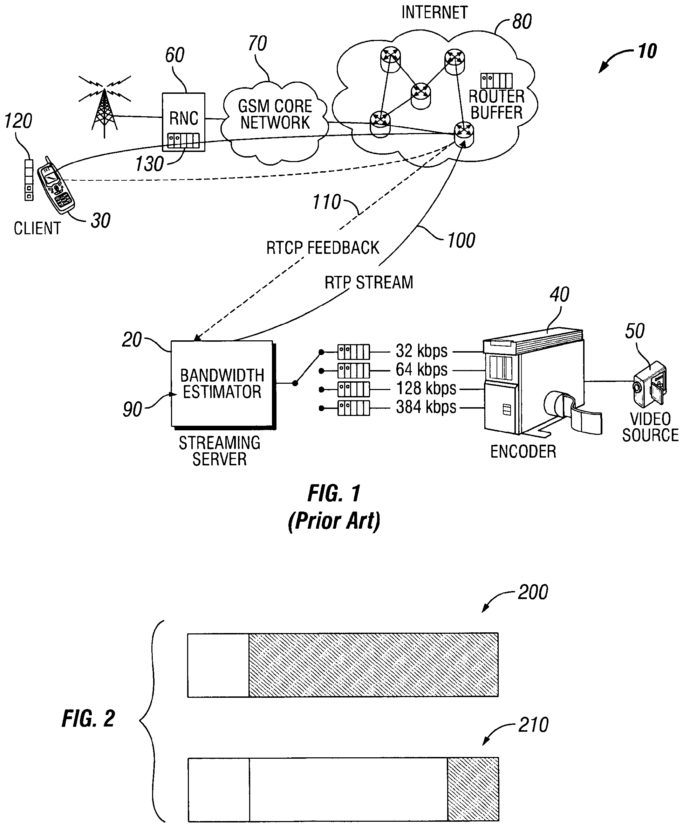

Fig. 1 is a block diagram of a packet based communication network 10 transmitting streaming data from a server 20 to mobile equipment 30. An encoder 40 receives streaming data from a live video source 50 for communicating over to the mobile equipment 30 over a packet based communication system 10. In accordance with the teachings of the present invention, a radio access to the mobile equipment 30 can be provided by a various radio access networks, such as radio network controller (RNC, 60) connected to a GSM Core Network 70 which, in turn, is communicably coupled to the Internet 80. Such radio access networks include GSM, WCDMA, and LTE technologies wherein various different radio access entities including base station transceivers (BTS), base station controllers (BSC), RNCs, and UMTS Terrestrial Radio Access Network (UTRAN) are used for providing wireless access to mobile equipment.

Streaming media differs from ordinary media in the sense that streaming media may be played out as soon as it is received rather than waiting for the entire file to be transferred over the network. The main advantage associated with this is to allow the user to begin viewing the content immediately or on a real-time basis with rather short delay. In order to implement streaming media over the Internet, for example, the Internet Engineering Task Force (IETF) has standardized a set of protocols for carrying real-time media over computer networks. The main control protocol is RTSP, and the main transport protocol is RTP. The main mobile streaming standard is 3GPP PSS, defined in TS 26.234 (and its correspondent in 3GPP2, 3GPP2 C.S0046-0), and it uses RTP + RTSP, but enhances the IETF standards with optional additional reporting, as well as allowing for more frequent reception reporting. The Real-time Transport Protocol (RTP) therefore defines a standardized packet format for delivering audio and video over IP networks. The RTP is typically used in conjunction with the RTP Control Protocol (RTCP). While the RTP carries the media stream, the RTCP is used to monitor transmission statistics and quality of service (QoS) information. The RTCP therefore runs alongside the RTP, providing periodic reporting of the network performance including reception quality feedback, participant identification and synchronization between media streams. The frequency of the RTCP reports is limited to avoid taking too much of the available bandwidth, but the more frequent the reports are, the faster the server can adapt to the available bandwidth. For mobile streaming, the clients typically send between 1 and 5 reports per second.

Referring now back to Fig. 1, the encoder 40 receives video stream from the video source 50 and encodes the received data and provides the streaming server 20 with video streams encoded with different bit rates. In this figure, four different bit rates of 32, 64, 128, and 384 kbps are shown. However, any number of video streams using much higher bit rates could be used, for example, in the LTE communication network. The streaming server 20 using a bandwidth estimator 90 determines an appropriate bitrate to be used for communicating the received streaming data and transmits the streaming video via RTP packets 100 over the Internet 80 and the GSM core network 70 and to the mobile equipment 30 via the wireless access network 60. The RTP, and a particular RTP payload format for each media, provides the functionality needed to transport the media between the two end points and further provides information necessary to reconstruct the original stream at the receiver. As the media is received, the client typically buffers the data for some time. Using such a buffer removes the effect of jitter and variations in the delay introduced by the network as long as the variations are not longer than the initial buffering time. Because of this, the buffer is sometimes referred to as the dejitter buffer 120. This dejitter buffer provides additional benefits such as the ability to conceal out-of-order delivery by the network and the ability to support techniques that try to hide packet losses. RTCP feedback packets (Receiver Reports) 110 are then transmitted over the same network back to the streaming server 90 providing statistics and performance feedback on providing the streaming data to the user equipment.

In a streaming session, it is generally more challenging to discover when more bandwidth is available for transporting streaming data than when less is available. As discussed above, when there is a bottleneck or when the available bandwidth drops below the currently desired transmission rate, the cellular network is forced to buffer packets at the RNC level since it is no longer capable of serving the incoming traffic. If the bandwidth is kept below the transmission rate for a sufficiently long period, the link layer buffers 130 in the mobile network will overflow and cause packet loss. However, the server should detect this before the buffers overflow and lower its transmission rate (by lowering the offered video bit rate from 384 kbps to, for example, 128 kbps). In a similar manner, if the network bandwidth increases, it is desirable for the sender to take advantage of this increased capacity by increasing the quality of media. However, detecting an increase in the available bandwidth is not as straightforward as detecting a decrease since the network buffer levels cannot decrease below zero. Therefore, one conventional way of testing the available bandwidth is to increase the bitrate hoping that the network has the capacity to handle the increased payload. In the event there is a buffer overflow or RTCP feedback indicates that there is an increase in the round trip delay (RTD), the streaming sever can then revert back to the lower bitrate. However, such stepping up and down causing additional jittering and changes in the video quality is undesirable from the user perspective. Furthermore, the step-size is fixed by the different content encoding bitrates, while the reaction time is determined by the RTCP Receiver Report frequency, and therefore a cautious probing without losing packets may be very difficult to achieve. For stored contents, this can be remedied to some extent by sending the contents faster than real-time and thus achieving a higher transport bitrate to probe the network bandwidth. This is however not possible for live streaming unless the data is buffered on the server side, which makes the live case closer to the stored case at the expense of introducing extra delays.

FIG. 2 is a block diagram of a data packet stuffed with dummy data. In accordance with the teachings of the present invention, in order for the streaming server to determine whether the packet based communication network communicating with mobile equipment can handle a higher bitrate, a RTP packet stream using higher bitrate than the current content encoding bitrate is transmitted by the streaming server. The purpose of such stuffing is to be able to probe the channel by increasing the bitrate without being forced to choose a higher content quality which will introduce a visible effect. Another advantage with stuffing the data stream is that the additional bitrate can be chosen at will and is not limited by existing encoding bitrates. In accordance with the teachings of the present invention, such probing can be achieved by inserting stuffed empty P-frames into the media stream, which signals no change from the previous picture, or by stuffing the media frames. This corresponds to extra RTP packets, but every video picture typically has a unique time-stamp and the new RTP time stamps are chosen so that they fit in between the ordinary packets. By inserting stuffing data, the streaming server is then able to increase the actual transmission rate allowing it to detect whether the bandwidth is available to actually handle the increased payload. Since the content rate of the actual media data is not actually increased, it will avoid the problem of the content quality flipping up and down. As another embodiment of the present invention, enlarged RTP packets can be sent to test the bandwidth as well. Accordingly, a RTP packet 200 is shown stuffed with dummy data allowing the streaming server to test the connection at a higher bitrate. As another embodiment of the present invention, another RTP packet 210 is shown partially stuffed with dummy data allowing the streaming server to transmit actual media data at the current bitrate while increasing the physical load at a higher bitrate by padding the packet with extra dummy data.

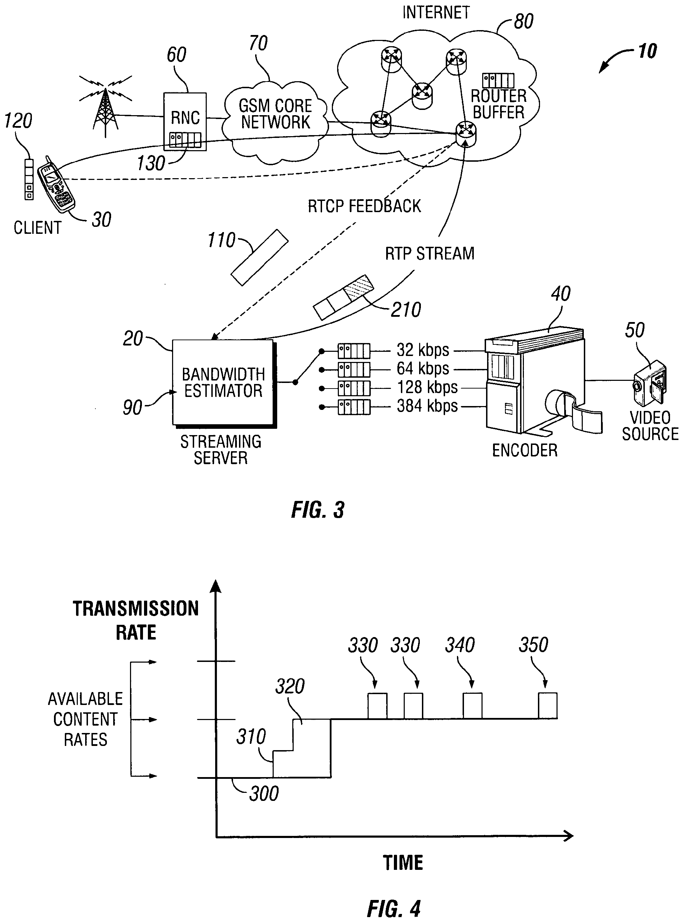

FIG. 3 is a block diagram of a packed based communication network transmitting a data packet with a higher bit rate stuffed with dummy data in accordance with the teachings of the present invention. If the network is deemed stable, the server enters into the probing state. Before probing commences, the server calculates the round-trip delay (RTD) and loss fraction and estimates other parameters such as network buffer media time and throughput for later use in the recover state. The streaming server 20 then takes a streaming data encoded at the same bitrate from the encoder 40 and stuffs the RTP packets with dummy data. Alternatively, the RTP packets may be completely stuffed with the dummy data. The stuffed RTP packets 210 are then transmitted over the network to the mobile equipment 30. After receiving the RTCP feedback message 110, the streaming server then monitors the round-trip delay, estimated throughput, loss fraction, and possibly other relevant parameters to determine whether the network is unable to sustain this data rate. Such an indication could be a rapidly increasing RTD. The probing is then aborted and the streaming server then enters the recovery state by reverting back to the previous lower bitrate. Otherwise, the higher bitrate is deemed to be acceptable and the streaming server 20 can then start transmitting actual RTP streams using the higher bitrate. Even though the RTP protocols are used to illustrate one example of the embodiment of the present invention, the additional stuffing/dummy data can also be inserted in another transport level protocol. Furthermore, the additional data can be inserted inside the media payload, for example inside the bit streams of the video standards in accordance with H.264, H.263 or MPEG-4.

FIG. 4 is a diagram illustrating the step of sequentially increasing the bit rates in accordance with the teachings of the present invention. In order to determine the maximum bitrate without having to flip up and down between two different rates, in accordance with the teachings of the present invention, the bandwidth estimator applies an algorithm to gradually and sequentially increase the transmission rate until the maximum rate has been reached. After an initial stabilization period 300, the streaming server checks whether the network appears stable (low, non-increasing round-trip delay, estimated throughput is about the same as the transmission rate, etc). If the network is deemed stable, the server enters the probing state wherein the difference between the initial bit rate and the desirable bit rate (i.e., the next highest bit rate or the maximum bit rate) is divided into a configurable number of steps (e.g., five). Thereinafter, every few seconds, the transmission rate is increased to next step 310. During this process, the server again monitors the round-trip, delay, estimated throughput, loss fraction and the NBMT via the RTCP reporting mechanism. If any of these indicates that the network is unable to sustain this data rate, probing is aborted and the server enters the recovery state. If none of the triggers fire and the transmission rate reaches the next media rate, the transmission rate is kept constant for a period of time. If the evaluation period has passed and the network still appears stable, the content rate is increased to the next level 320. This process is repeated until either the highest content rate is reached or until the RTCP feedback indicates that probing should be aborted 330. After a failure, the probing is not attempted again until a certain period of time has passed 330. Furthermore, for each additional failure, the time period for attempting next probing 340-350 is increased in order to avoid a ping-ponging behavior.

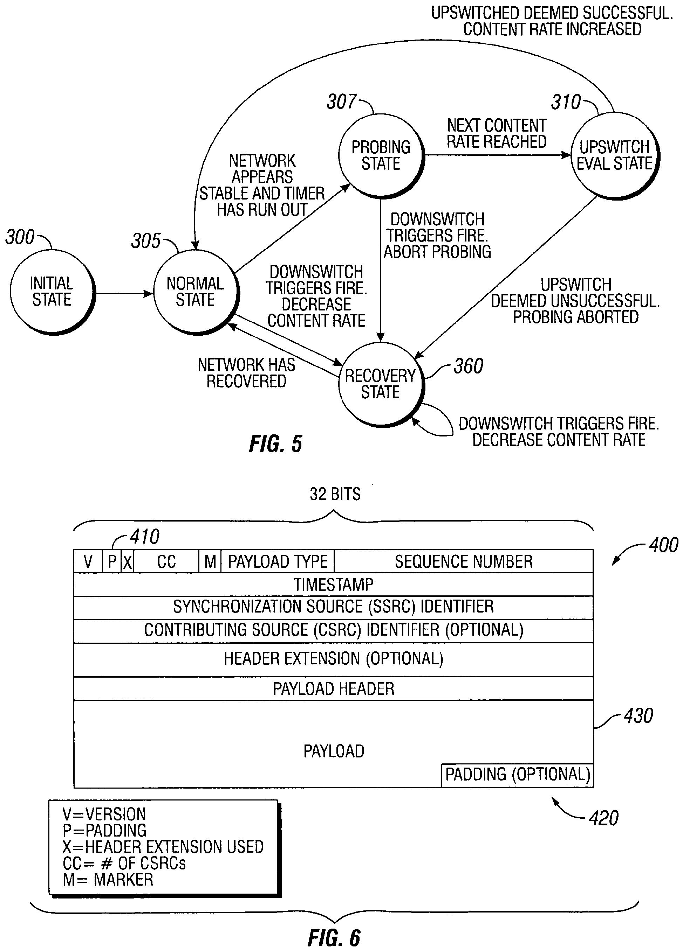

FIG. 5 is a state diagram illustrating the steps performed for sequentially probing and increasing the bit rates in accordance with the teachings of the present invention. As discussed in reference to Fig. 4, the streaming sever attempts to gradually increase the transmission rate in order to find out how much traffic the network can handle without filling up the network buffers. Accordingly, after an initial stabilization period 300, the streaming server enters the normal state 305 where it checks whether the network appears stable by reviewing round-trip delay, estimated throughput, and various other parameters. The streaming sever then attempts to increase the bitrate by entering the probing state 307 where it tries to increase the transmission rate at a regular, or randomly chosen, interval. The random choice of the interval is often advantageous to avoid resonance effects when many clients use the same algorithm. After transmitting the probing data at a higher bitrate, the streaming server then enters the upswitch evaluation state 310 to determine whether the network is capable of handling the higher bandwidth. During this state, round-trip delay, estimated throughput, loss fraction and other network performance and quality related parameters are evaluated to ensure that an acceptable quality is maintained for a certain period of time. If the evaluation period has passed and the transport appears sustainable, the streaming server then reverts back to the normal state 305 where the probing, increasing, and evaluation steps are repeatedly performed. If, on the other hand, the RTCP feedback, for example, indicates that the probing should be aborted, the streaming server then enters the recovery state 360 wherein the bitrate is reverted back to the previous level and the probing data is no longer transmitted. After such a recovery, the streaming server then goes back to the normal state 305 and waits a certain period of time before reattempting its next probing step. In that regard, for each failed probing attempt, the wait period before attempting the next probe may be increased in order to avoid a ping-ponging behavior.

FIG. 6 is a RTP packet structure wherein a RTP packet format 400 includes a 32 bit header wherein a P bit 410 can be used for indicating that the payload includes certain amount of padding in accordance with the teachings of the present invention. The part of the payload section 430 includes the padded data 420 wherein the P bit 410 indicates that a padding has occurred in this RTP packet and the last octet of padding then indicates the total number of padded octets in this particular RTP packet. In accordance with the teachings of the present invention, the streaming server can probe the network for a higher bitrate availability by transmitting RTP packets padded with dummy data in order to test the network with a higher bitrate without having to actually send the actual streaming data at the higher bitrate level.

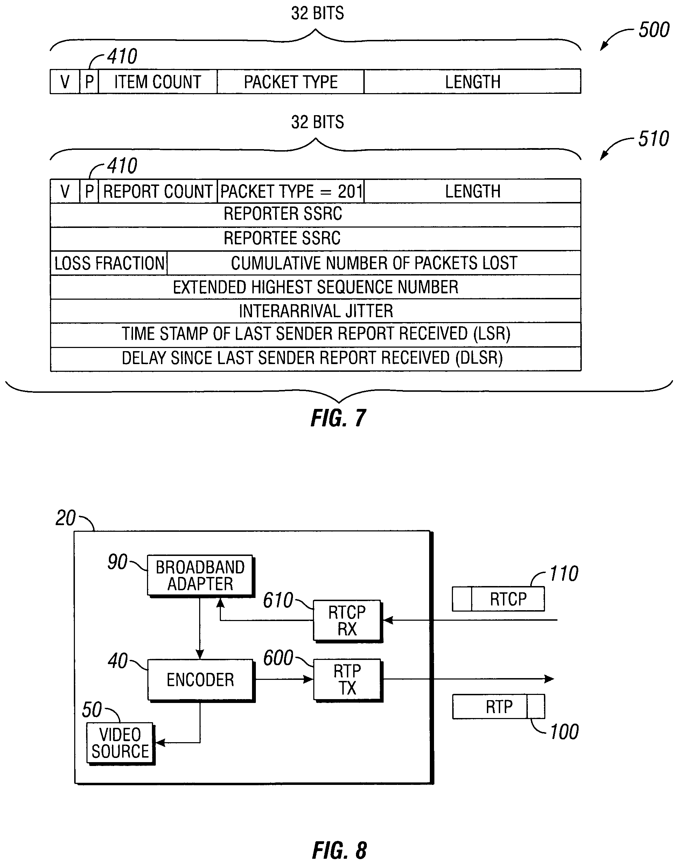

FIG. 7 is a RTCP packet structure wherein as an alternative embodiment of the present invention, a probing of the network bandwidth for a higher bitrate can be achieved by increasing the rate of sending additional RTCP messages 500 as well as increase the rate of sending RTCP sender reports 510 back to the streaming server and testing a higher bitrate by evaluating the "cumulative number of packets lost", "inter-arrival jitter" or "timestamp of last sender report received" parameters.

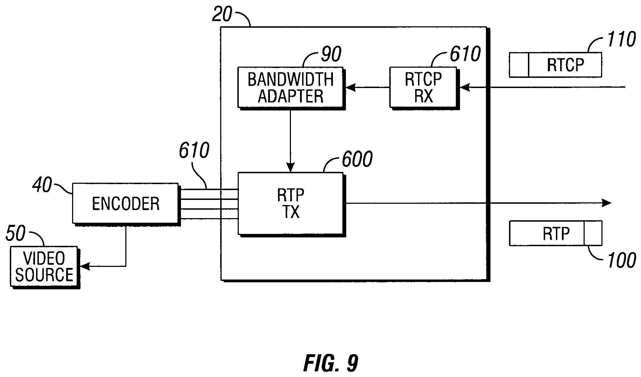

FIGs. 8 and 9 are block diagrams illustrating a streaming server including a bandwidth adaptor for evaluating and deciding on the appropriate bitrates for streaming data in accordance with the teachings of the present invention. The streaming server includes a video source 50 connected to an encoder 40 which is communicably coupled to a RTP transmitter 600 which transmits RTP messages carrying streaming data encoded at a particular bitrate over a packet based communication network. Such stream server may be a mobile TV service provider providing live broadcast channels 50 wherein the bandwidth adaptor 90 attempts to determine the appropriate bitrate for encoding the streaming data from the video source to be transmitted by the RTP transmitter 600. After transmitting such RTP messages 100, RTCP reports 110 are then received by the RTCP receiver 610 wherein report parameters included in the RTCP messages 610 are evaluated by the bandwidth adaptor 90 for determining whether a probing attempt should be initiated to raise the bitrate to a higher level as discussed above. Fig. 9 is another embodiment of the present invention wherein the video source 50 and the encoder 40 reside external to the streaming server 20. Since the encoder 40 resides external to the streaming server 20, the encoder 40 provides multiple feeds 610 to the RTP transmitter 600 in order for the bandwidth adaptor 90 to select the most appropriate bitrate to be transmitted over the network.

Even though the exemplary embodiment of the present invention is described in the context of a mobile unit gaining access to the packet based communication network over a radio access network, one skilled in the art would understand and appreciate the currently disclosed adaptive streaming invention can be applied equally well in any other packet based communication network for where network bandwidth availability varies while providing streaming data.

As will be recognized by those skilled in the art, the innovative concepts described in the present application can be modified and varied over a wide range of applications. Accordingly, the scope of patented subject matter should not be limited to any of the specific exemplary teachings discussed above, but is instead defined by the following claims.

## Claims

1. A method of providing adaptive streaming within a packet communication network, comprising the steps of:
streaming multimedia data contained in packets from a streaming server (20) to a client terminal (30) using a first bitrate over said packet communication network; and
probing said packet communication network to determine whether a higher bitrate can be handled by said packet communication network, said step of probing comprises the steps of:
streaming dummy data from a streaming server to a client terminal using a second bitrate inside the packet media streams over said packet communication network wherein said second bitrate is higher than said first bitrate and wherein a Real-time Transport Protocol RTP packet is stuffed partially with the dummy data allowing the streaming server to transmit actual multimedia data at the first bitrate while increasing the bitrate to the second bitrate by padding the packet partially with the dummy data;
transmitting the RTP packet with said multi-media data padded with the extra dummy data on RTP layer and using a RTP padding mechanism;
determining that said packet communication network is capable of handling said second bitrate; and
in response to an affirmative determination, streaming said multimedia data from said streaming server to said client terminal using said second bitrate; otherwise, reverting to streaming said multimedia data from said streaming server to said client terminal using said first bitrate.

2. The method of Claim 1 wherein said step of determining that said packet communication network is capable of handling said second bitrate includes evaluating a round-trip delay RTD reported by client terminal.

3. The method of Claim 1 wherein said step of determining that said packet communication network is capable of handling said second bitrate includes evaluating transport characteristics using receiver reports.

4. The method of Claim 1 wherein said step of probing said packet communication network further comprises the step of sequentially increasing the bitrate associated with streaming said dummy data over said packet communication network until it is determined that said packet communication network is incapable of handling said increased bitrate or maximum bandwidth associated with said packet communication network has been reached.

5. The method of Claim 4 wherein said streaming server receiving a number of receiver reports over the packet communication network wherein said size of sequentially increasing the bit rate is dependent on the receiving frequency of said receiver reports.

6. The method of Claim 1 wherein said step of probing includes expanding the media bitstream inside an RTP packet by using stuffing bit-patterns or special coding units to achieve the second bitrate.

7. The method of Claim 1 wherein said step of probing includes expanding the media bitstream by expanding the media data and introducing extra RTP packets using stuffing bit patterns, or special coding units to achieve the second bitrate.

8. The method of Claim 1 wherein said step of probing is performed on an interval to determine whether a higher bitrate can be used over said communication link.

9. The method of Claim 1 wherein said step of transmitting said packet includes transmitting the RTP packet with empty P-pictures.

## Patentansprüche

1. Verfahren zur Bereitstellung adaptiven Streamings innerhalb eines Paketkommunikationsnetzes, umfassend die folgenden Schritte:
Streamen von Multimedia-Daten, die in Paketen enthalten sind, von einem Streaming-Server (20) zu einem Client-Endgerät (30) unter Verwendung einer ersten Bitrate über das Paketkommunikationsnetz; und
Sondieren des Paketkommunikationsnetzes, um zu bestimmen, ob durch das Paketkommunikationsnetz eine höhere Bitrate bewältigt werden kann, wobei der Schritt des Sondierens die folgenden Schritte umfasst:
Streamen von Dummy-Daten innerhalb der Paketmedienströme von einem Streaming-Server zu einem Client-Endgerät über das Paketkommunikationsnetz unter Verwendung einer zweiten Bitrate, wobei die zweite Bitrate höher als die erste Bitrate ist, und wobei ein Echtzeit-Transportprotokoll, RTP,-Paket teilweise mit den Dummy-Daten vollgestopft wird, um dem Streaming-Server zu ermöglichen, tatsächliche Multimedia-Daten mit der ersten Bitrate zu senden, während die Bitrate durch teilweises Füllen des Pakets mit den Dummy-Daten auf die zweite Bitrate erhöht wird;
Senden des RTP-Pakets mit den Multimedia-Daten, die mit den zusätzlichen Dummy-Daten gefüllt sind, auf der RTP-Schicht und unter Verwendung eines RTP-Füllmechanismus;
Bestimmen, dass das Paketkommunikationsnetz zum Bewältigen der zweiten Bitrate fähig ist; und
Streamen in Reaktion auf eine positive Bestimmung der Multimedia-Daten unter Verwendung der zweiten Bitrate vom Streaming-Server zum Client-Endgerät;
andernfalls Zurückkehren zum Streamen der Multimedia-Daten vom Streaming-Server zum Client-Endgerät unter Verwendung der ersten Bitrate.

2. Verfahren nach Anspruch 1, wobei der Schritt des Bestimmens, dass das Paketkommunikationsnetz zum Bewältigen der zweiten Bitrate fähig ist, ein Bewerten einer vom Client-Endgerät gemeldeten Umlaufzeitverzögerung, RTD, umfasst.

3. Verfahren nach Anspruch 1, wobei der Schritt des Bestimmens, dass das Paketkommunikationsnetz zum Bewältigen der zweiten Bitrate fähig ist, ein Bewerten von Transportcharakteristiken unter Verwendung von Empfängermeldungen umfasst.

4. Verfahren nach Anspruch 1, wobei der Schritt des Sondierens des Paketkommunikationsnetzes ferner den Schritt des fortlaufenden Erhöhens der Bitrate in Verbindung mit dem Streamen der Dummy-Daten über das Paketkommunikationsnetz umfasst, bis bestimmt wird, dass das Paketkommunikationsnetz nicht zum Bewältigen der erhöhten Bitrate fähig ist, oder eine maximale Bandbreite, die mit dem Paketkommunikationsnetz assoziiert ist, erreicht wurde.

5. Verfahren nach Anspruch 4, wobei der Streaming-Server eine Anzahl von Empfängermeldungen über das Paketkommunikationsnetz empfängt, wobei die Größe des fortlaufenden Erhöhens der Bitrate von der Empfangsfrequenz der Empfängermeldungen abhängt.

6. Verfahren nach Anspruch 1, wobei der Schritt des Sondierens ein Erweitern des Medien-Bitstroms innerhalb eines RTP-Pakets durch Verwenden von Stopfbitmustern oder Spezialcodierungseinheiten zum Erreichen der zweiten Bitrate umfasst.

7. Verfahren nach Anspruch 1, wobei der Schritt des Sondierens ein Erweitern des Medien-Bitstroms durch Erweitern der Mediendaten und Einführen zusätzlicher RTP-Pakete unter Verwendung von Stopfbitmustern oder Spezialcodierungseinheiten zum Erreichen der zweiten Bitrate umfasst.

8. Verfahren nach Anspruch 1, wobei der Schritt des Sondierens in einem Intervall durchgeführt wird, um zu bestimmen, ob eine höhere Bitrate über die Kommunikationsstrecke verwendet werden kann.

9. Verfahren nach Anspruch 1, wobei der Schritt des Sendens des Pakets ein Senden des RTP-Pakets mit leeren P-Bildern umfasst.

## Revendications

1. Procédé de fourniture de streaming adaptatif à l'intérieur d'un réseau de communication en paquets, comprenant les étapes de :
le streaming de données multimédias contenues dans des paquets d'un serveur de streaming (20) à un terminal client (30) en utilisant un premier débit binaire sur ledit réseau de communication en paquets ; et
le sondage dudit réseau de communication en paquets pour déterminer si un débit binaire supérieur peut être assumé par ledit réseau de communication en paquets, ladite étape de sondage comprenant les étapes de :
le streaming de données fictives d'un serveur de streaming à un terminal client en utilisant un deuxième débit binaire à l'intérieur des flux de supports en paquets sur ledit réseau de communication en paquets, dans lequel ledit deuxième débit binaire est supérieur au dit premier débit binaire et dans lequel un paquet de protocole de transport en temps réel, RTP, est rempli partiellement de données fictives permettant au serveur de streaming de transmettre des données multimédias réelles au premier débit binaire tout en augmentant le débit binaire au deuxième débit binaire en remplissant partiellement le paquet avec les données fictives ;
la transmission du paquet RTP avec lesdites données multimédias remplies avec les données fictives supplémentaires sur la couche RTP et en utilisant un mécanisme de remplissage RTP ;
la détermination que ledit réseau de communication en paquets est capable d'assumer ledit deuxième débit binaire ; et
en réponse à une détermination affirmative, le streaming desdites données multimédias dudit serveur de streaming au dit terminal client en utilisant ledit deuxième débit binaire ;
sinon, le retour au streaming desdites données multimédias dudit serveur de streaming au dit terminal client en utilisant ledit premier débit binaire.

2. Procédé selon la revendication 1, dans lequel ladite étape de la détermination que ledit réseau de communication en paquets est capable d'assumer ledit deuxième débit binaire comprend l'évaluation d'un retard aller-retour, RTD, rapporté par le terminal client.

3. Procédé selon la revendication 1, dans lequel ladite étape de la détermination que ledit réseau de communication en paquets est capable d'assumer ledit deuxième débit binaire comprend l'évaluation de caractéristiques de transport en utilisant des rapports de récepteur.

4. Procédé selon la revendication 1, dans lequel ladite étape du sondage dudit réseau de communication en paquets comprend en outre l'étape de l'augmentation séquentielle du débit binaire associé au streaming desdites données fictives sur ledit réseau de communication en paquets jusqu'à ce qu'il soit déterminé que ledit réseau de communication en paquets est incapable d'assumer ledit débit binaire accru ou qu'une largeur de bande maximale associée au dit réseau de communication en paquets a été atteinte.

5. Procédé selon la revendication 4, dans lequel ledit serveur de streaming reçoit un nombre de rapports de récepteur sur le réseau de communication en paquets, dans lequel ladite taille de l'augmentation séquentielle du débit binaire dépend de la fréquence de réception dudit rapport de récepteur.

6. Procédé selon la revendication 1, dans lequel ladite étape du sondage comprend l'expansion du flux de bits de support à l'intérieur d'un paquet RTP par l'utilisation de motifs de bits de remplissage ou d'unités de codage spéciales pour atteindre le deuxième débit binaire.

7. Procédé selon la revendication 1, dans lequel ladite étape du sondage comprend l'expansion du flux de bits de support par l'expansion des données de support et l'introduction de paquets RTP supplémentaires en utilisant des motifs de bits de remplissage ou des unités de codage spéciales pour atteindre le deuxième débit binaire.

8. Procédé selon la revendication 1, dans lequel ladite étape du sondage est effectuée sur un intervalle pour déterminer si un débit binaire supérieur peut être utilisé sur ladite liaison de communication.

9. Procédé selon la revendication 1, dans lequel ladite étape de la transmission dudit paquet comprend la transmission du paquet RTP avec des images P vides.
